(19) Europäisches Patentamt
European Patent Office
Office européen des brevets

(11) **EP 3 968 282 A1**

(12) **EUROPEAN PATENT APPLICATION**

(43) Date of publication:
**16.03.2022 Bulletin 2022/11**

(21) Application number: **20196056.4**

(22) Date of filing: **14.09.2020**

(51) International Patent Classification (IPC):
**G06T 7/80** (2017.01)    **H04N 5/235** (2006.01)

(52) Cooperative Patent Classification (CPC):
**G06T 7/80; H04N 5/2351; H04N 5/2352;**
**H04N 5/2355;** G06T 2207/10144;
G06T 2207/20208; G06T 2207/20221

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Eppendorf AG**
**22339 Hamburg (DE)**

(72) Inventor: **PETERMANN, Alexander**
**22179 Hamburg (DE)**

(74) Representative: **Schwarz und Baldus**
**Patentanwälte**
**Hermann-Schmid-Straße 10**
**80336 München (DE)**

(54) **METHOD AND DEVICE FOR DETERMINING A VALUE OF A CAMERA PARAMETER**

(57)    A computer implemented method for determining a first value of at least a camera parameter of a camera, the method comprising at least the steps of accessing a first image captured by the camera, wherein the first image displays a scene and comprises a first set of pixels, and wherein the scene comprises a first scene region, the first scene region being displayed in a first image portion of the image and generating, for each pixel of the first set of pixels, a respective first data item associated to said each pixel, wherein said respective first data item comprises respective position information associated to said each pixel, said respective position information being indicative of the position in the first image of said each pixel with respect to the location of the first image portion in the first image and determining the first value of the camera parameter by using at least a first plurality of pixels of the first set of pixels, wherein, for each pixel of the first plurality of pixels, the respective position information associated to said each pixel fulfils a first condition.

Fig. 1

EP 3 968 282 A1

**Description**

The present invention refers to a method and a device for determining a value of a camera parameter. In particular, the present invention refers to a method and a device for determining a value of a camera parameter of a camera of an automated laboratory system (ALS) and, more particularly, of an automated pipetting system. The present invention concerns also an ALS, e.g. an automated pipetting system, configured to carry out the method of the present invention.

The quality of an image captured by a camera depends strongly on the value of the camera parameters, such as gain, ISO, exposure value, exposure time, aperture size, focusing distance, brightness, contrast, resolution, f-stop, and/or the entries of the white balance matrix. An estimate of the appropriate values of the calibration parameters may be obtained by using the calibration methods known in the art. Typically, known calibration methods determine the value (hereinafter also referred to as: "calibrated value") of at least a parameter of a camera by using the pixels of a calibration image acquired by said camera.

In many technical fields, images are processed by object identification algorithms to identify the objects displayed therein. Typically, object identification algorithms identify objects displayed in an image by processing the entire image or one or more regions of interest (ROIs). A ROI is, in particular, a region of the image, in which at least an object to be identified and/or detected is expected to be displayed. For instance, in the field of laboratory automation, the to-be-identified objects are the labware items and the ROIs are portions of the work deck of the ALS.

In many technical fields, object identification shall have a relatively high reliability. This is the case, for instance, in the field of autonomous driving and in the field of laboratory automation. The reliability of an object identification algorithm depends on the quality of the image processed by said algorithm, i.e. on how faithful the intensity of the pixels of said image reproduce the scene displayed in the image. Hence, ultimately, the quality of an image affects the reliability of the identification performed by using said image. In order for an object identification algorithm to attain the required reliability, at least the ROIs shall have a sufficient quality, i.e. the pixels of said regions shall reproduce sufficiently faithfully the portions of the scene displayed in said regions. Known calibration methods do not allow for selecting pixels used for calibrating the camera, hence, in some cases, the ROIs of images captured by using the calibrated values of the camera do not have sufficiently high quality.

This occurs, for instance, if the illumination of the scene is not uniform, e.g. a portion of the scene, which does not contain any to-be-identified objects, is brightly illuminated. In this case, at least a ROI of an image captured by using the calibrated values of the camera will be underexposed. For instance, in the field of laboratory automation, this event may occur if the ALS is positioned on a white, brightly illuminated table and a portion of this table is in the field of view of the camera. At least a ROI may instead be overexposed if, for instance, a portion of the scene, which does not contain any to-be-identified objects, is in the shadow.

Moreover, in the field of laboratory automation, similar problems may arise if the scene comprise a bright-coloured labware item and a dark-coloured labware item. In this case, in an image captured by using the calibrated values of the camera, ROI displaying the bright-coloured labware item will be overexposed and/or the ROI displaying the dark-coloured labware item will be underexposed.

There is thus the need for methods for determining a value of a camera parameter which allows for allow for obtaining images having regions of interests with sufficient quality, even if said images display non-uniformly illuminated scenes and/or scenes comprising objects having different brightness.

At least some of these problems are solved, at least in part, by the invention of the present application, which relates to a computer-implemented method according to claim 1, to a data processing system according to claim 12, to a computer program product according to claim 14 and to a computer-readable storage medium according to claim 15. Embodiments of the invention are subject matter of the dependent claims. In one aspect, the present invention refers to a computer implemented method for determining a first value of at least a camera parameter of a camera. The method of the present invention comprises at least the steps of:

- accessing a first image captured by the camera, wherein the first image displays a scene and comprises a first set of pixels, and wherein the scene comprises a first scene region, the first scene region being displayed in a first image portion of the image;
- generating, for each pixel of the first set of pixels, a respective first data item associated to said each pixel, wherein said respective first data item comprises respective position information associated to said each pixel, said respective position information being indicative of the position in the first image of said each pixel with respect to the location of the first image portion in the first image; and
- determining the first value of the camera parameter by using at least a first plurality of pixels of the first set of pixels, wherein, for each pixel of the first plurality of pixels, the respective position information associated to said each pixel fulfils a first condition.

The camera may be a polychrome camera, a greyscale camera, a video camera and/or a photo camera.

An image may be a vector image or a two-dimensional grid of pixels, e.g. a rectangular grid of pixels. In particular, the location of a pixel in an image may be univocally determined in terms of its two-dimensional image coordinate in the image, said coordinates representing the location of said pixel in the two-dimensional grid of pixels.

An image, e.g. the first and/or the second image, may be encoded by at least a bitmap. A bitmap encoding an image or a portion thereof may comprise, e.g. consist of, an array of bits that specifies intensity, i.e. the color, of each pixel of said image or a portion thereof. The bitmap may be palette-indexed so that the entries of the array are indexes onto a color table. The entries of the array may store the bits encoding the color of the pixel. A bitmap may comprise, e.g. consist of, a dot matrix data structure representing the two-dimensional grid of pixels. The bitmap may further comprise information concerning the number of bits per pixel, the number of pixels per row of the two-dimensional grid and/or the number of pixels per column of said grid. An image viewer may use the information encoded in the bitmap to render the image on the screen of a computing device.

In particular, the first image may be captured by using the camera with the exposure value set to $E_{v,0}$, the exposure time set to $E_{t,0}$, and/or the f-stop set to $F_0$. In particular, the first image consists of the first set of pixels. The first image may be a polychrome or a greyscale image.

The intensity, e.g. the color, of a pixel may be expressed in terms of the RGB color model, the CMY color model or the CMYK color model. In particular, in the RGB color model, the intensity of a pixel is expressed in terms of a triplet, $(R, G, B)$, of three integer values, each value of said triplet ranging from 0 to 255. In this case, the intensity of a pixel may be expressed in terms of a three-dimensional coordinate. Alternatively, or in conjunction with the above, in the RGB model, the intensity of a pixels may be expressed by using the hue, saturation, value (HSV) representation or the hue, saturation, lightness (HSL) representation. In particular, in a greyscale image, the intensity of a pixel may be expressed in terms of a single integer value and, in particular said value may range from 0 to a maximum value. For example, said maximum value may be equal to 256 or 65,536.

In particular, an image may be stored in a primary and/or secondary memory of a computing device, e.g. of the computing device carrying out the method of the present invention. For instance, an image may be stored in a file, organized in a database, and/or stored in storage means or in a cloud.

In particular, the first scene region comprises a first to-be-identified object. For example, the first scene may comprise a work deck of an ALS, and a first labware item positioned on the work deck, wherein the first labware item is the first object to be identified. In this case, the first image region may comprise the first labware item and at least a first region of the work deck. In particular, the first scene region may consist of a plurality of scene regions which are disconnected to one another. For instance, the first scene region may consist of a first brightly illuminated scene region and a second shadowed scene region. For example, the first scene region may consist of a first portion of the scene, which comprises a brightly illuminated labware item, and a second portion of the scene, which comprises a dark-coloured labware item.

The first image portion may consist of a fourth set of pixels of the first image. In particular, the fourth set of pixels comprises, e.g. consists of, the pixels which are estimated to display the first scene region. In particular, the first scene image portion may consist of a plurality of image portions which are disconnected to one another. For instance, the first image portion may consist of a portion of the image, which displays a brightly illuminated labware item, and another portion of the scene, which displays a dark-coloured labware item. For example, the first image portion may consist of a portion of the image, which displays a brightly illuminated scene region, and another portion of the scene, which displays a shadowed scene region. In particular the first image portion consists of the pixels displaying the first scene region.

The step of accessing an image may comprise receiving said image e.g. from a computing device. Alternatively, or in conjunction with the above, the step of accessing an image may comprise retrieving said image e.g. from a computing device, from the primary and/or secondary memory thereof, from a database, and/or from a cloud.

In particular, the location of the first image portion in the first image may be specified by information indicative of said location. For instance, this information comprises information indicative of the position in the first image of each pixel of the fourth set of pixels. For example, the location of the first image portion is an estimate of the location of this portion in the first image. For instance, said estimate may be obtained by using a locating algorithm for determining the location of the first image portion in the first image.

For example, the fourth set of pixels is a rectangular grid of the first image. Alternatively, the fourth set of pixels may be a circle of the first image, said circle having a radius, $R$, and a central pixel, $C$. In this case, the fourth set of pixels consist of each pixel, $P$, of the first image, such that $d(C,P) \leq R$, wherein $d(C,P)$ is the distance, e.g. the Euclidean distance, between said each pixel and the central pixel.

Any structure format may be used to encode the information indicative of the location of the first image portion in the first image, insofar that the information comprised therein may be retrieved and interpreted correctly. For example, said information may specify the location of some of the pixels comprised in the fourth set of pixels, insofar that said information is sufficient to correctly obtain the location of each of the pixels of said set. For example, if the fourth set of pixels is a rectangular grid of the first image, information indicative of the position of the vertices of said grid is sufficient to obtain the location of each of the pixels of the fourth set of pixels. Moreover, for instance, if the fourth set of pixels is a circle, the position of the central pixel in the first image and the value of the radius are sufficient to obtain the location of each of the pixels of the fourth set of pixels.

For each pixel of the first set of pixels, the information indicative of the position of said each pixel with respect to the location of the first image portion in the first image may specify whether said each pixel is comprised in the first image portion, e.g. in the fourth set of pixels. Alternatively, or in conjunction with the above, the information indicative of the position of said each pixel with respect to the location of the first image portion may specify whether the distance between said each pixel and the first image portion and/or whether said distance is greater than a specified distance value.

For example, the distance between a pixel and the first image portion may be the distance between said pixel and a reference pixel of the fourth set of pixels. If the fourth set of pixels is a rectangular grid or a circle, the reference pixel may be the pixel located at the center of the rectangular grid or the central pixel, respectively. In particular, the distance between a pixel and a reference pixel is the Euclidean distance between these pixels and may be expressed in unit of pixels.

For instance, for each pixel of the first set of pixels, the first data item associated to said each pixel may be generated by generating the information associated to said each pixel, by encoding said information in the first data item associated to said each pixel and by storing said first data item in a primary and/or secondary memory of a computing device.

For each pixel of the first set of pixels, the information associated to said each pixel may be the output of a first information generating algorithm. For example, the first information generating algorithm may process the position of a pixel in the first image to assess whether said pixel is comprised in the first image portion, e.g. in the fourth set of pixels. Alternatively, or in conjunction with the above, the first information generating algorithm may process the position of a pixel in the first image to determine the distance between said pixel and the reference pixel of the fourth set of pixels and, optionally, to assess whether said distance is greater than or equal to the specified distance value.

A data item according to the present invention is in particular a set of symbols comprising information. Each of the data items according to the present invention may be stored in a file, organized in a database, and/or stored in storage means or in a cloud. Two or more of the data items may be stored together in the same file. For example, the first data items associated to the pixels of the first set of pixels may be stored in an array data structure comprising a plurality of entries. In particular, for each pixel of the first set of pixels, there is a respective entry of the array data structure which comprises the first data item associated to said each pixel.

For each pixel of the first set of pixels, the respective first data item associated to said each pixel may have an integer, a float, or a Boolean data type. For instance, if said respective first data item has a Boolean data type, the value "True" encodes information indicating that said each pixel is not comprised in the first image portion and the value "False" encodes information indicating that said each pixel is comprised in the first image portion. Alternatively, the value "True" may encode information indicating that said each pixel is comprised in the first image portion and the value "False" information indicating that said each pixel is not comprised in the first image portion. Moreover, if, for each pixel of the first set of pixels, the first data item associated to said each pixel has an integer or a float data type, the value of said respective first data item specifies the distance between said each pixel and the reference pixel of the fourth set of pixels.

For example, if, for each pixel of the first set of pixels, the first data item associated thereto has a Boolean data type, the first condition may comprise the condition that the value of first data item associated to said each pixel is "True". If, for each pixel of the first set of pixels, the value of the first data item associated to said each pixel specifies the distance between said each pixel and the reference pixel, the first condition may comprise the condition that the first data item is greater than or equal to the specified distance value. In particular, for each pixel of the first plurality of pixels, the respective position information associated to said each pixel may fulfil at least a further condition.

The step of determining the first value of the camera parameter may be carried out by using a determination algorithm. In particular, the determination algorithm processes the intensity each pixel of the first plurality of pixels to determine the first value of the camera parameter. The determination algorithm is in particular a calibration algorithm for the camera parameter.

In particular, the step of determining the first value of the camera parameter may be carried out by using also one of more pixels of the first image that are not comprised in the first plurality of pixels. For instance, in order to estimate the robustness of the determination of the first value of the camera parameter, said value may be determined by using the first plurality of pixels and a third plurality of pixels, the number of pixels of the third plurality of pixels being much smaller than the number of pixels of the first plurality of pixels. According to the present invention, the number of pixels of a plurality of pixels is much smaller than the number of pixels of a further plurality of pixels when the ratio between the former number and the latter number is smaller than or equal to 0.1, in particular smaller than or equal to 0.01 and, more particularly, smaller than or equal to 0.001.

Moreover, the first plurality of pixels may comprise each pixel of the first set of pixels such that the respective position information associated to said each pixel fulfils the first condition. Alternatively, at least a pixel of the first set of pixels may not be comprised in the first plurality of pixels even if the position information associated to said pixel fulfils the first condition.

The step of determining the first value of the camera parameter is carried out at the pixel level by using the first plurality of pixels. Hence said step may be carried out by processing the pixels of the first plurality of pixels by means of the calibration algorithms known in the art, e.g. the ones implemented in the known packages and libraries for calibrating cameras.

The step of determining the first value of the camera parameter may comprise determining, for each camera parameter of a set of camera parameters of the camera, a respective first value of said each camera parameter. In particular, the camera parameter is comprised in the set of camera parameters. For example, if the camera parameter is an entry of a white balance matrix, the set of camera parameters may comprise each entry of said matrix.

The first condition is a requirement to be fulfilled by the position information associated to the pixels of the first plurality of pixels. Hence, ultimately the first condition encodes a position constraint to fulfilled, at the pixel level, by the pixels of the first plurality of pixels. These pixels reproduce some features of the scene and the first image portion displays the first scene region. Hence, the position constraint is based on some scene information, i.e. on information about the features of the scene and in particular, about their position with respect to the first scene region, e.g. with respect to the ROI displaying the to-be-identified objects. Hence, the method of the present invention allows for performing a pixel-based camera calibration by using pixels that fulfills constraints based on the features of the scene, e.g. on the position of said features with respect the first scene region. This way, the calibration carried out by the present invention is adapted to the features of the scene and is optimized for features displayed by the pixels of the first plurality. In particular, images captured by using the first value of the camera parameter provide a faithful representation of the scene features displayed by the pixels of the first set of pixels.

For example, the camera may be comprised in an ALS and the first scene region may comprise a portion of the dark-colored table, onto which said ALS is positioned. In this case, the position constraint may require the pixels of the first plurality of pixels to be arranged outside the first image portion. In this case, the determination of the first value is carried out by taking into account information about the features of the scene, i. e. the presence and the location of the dark colored table. In particular, in this case, the first value of the camera parameter is determined without taking into account the pixels depicting the portion of the table. Hence, an image captured by using the first value of the camera parameter will faithfully reproduce the scene regions not comprising the dark-colored table.

Alternatively, the first scene region may comprise the to-be-identified labware item. In this case, the position constraint may be fulfilled if the pixels of the first plurality of pixels are comprised in the first image portion. This way, the determination is carried out by taking into account information about the position pf the to-be-identified labware item, i.e. by using the pixels depicting the labware item. Hence, an image captured by using the first value of the camera parameter will faithfully reproduce the scene region comprising the to-be-identified labware item, thereby improving the accuracy of the identification of said item.

The adaptivity of the calibration of the present invention to the features of the scene increases with the amount of scene information, on which the position constraint is based. For example, the position constraint may be based on a relatively high amount of scene information if the scene comprises known objects and, in particular, if the position of said objects with respect to the camera is known. This amount of information is further increased if at least some of the objects, that may be comprised in the scene, may be positioned only in given locations of the scene.

This is the case, for instance, if the camera is comprised in an ALS, as in this case the scene comprises known objects, e.g. the work deck and the table onto which the ALS is positioned. Further, in this case, the position of the work deck in the scene is known, because the work deck and the camera are typically arranged in a fixed position with respect to each other. Furthermore, typically, at least some of the objects that may be comprised in the scene, e.g. the labware items, may be positioned onto predetermined regions of the work deck, i.e. in given locations of the scene.

In an embodiment of the present invention, the camera parameter is selected from the group consisting of the gain, ISO, exposure value, exposure time, aperture size, an entry of a white balance matrix, focusing distance, brightness, contrast, f-stop, and resolution.

For example, if the camera parameter is the exposure value, the first value, $E_{V,1}$, of the exposure value may be computed by using the calibration algorithm described by the following formula:

$$E_{v,1} \;=\; E_{v,0} \,+\, \log_2\!\left(\frac{B_1}{B_{opt}}\right), \qquad (1)$$

and by the formulae (2) to (5) described in the following. The quantity $B_1$ is the average brightness of the pixels of the first plurality of pixels, $P_1$, and the quantity $B_{opt}$ is the optimal brightness.

For example, if the intensity of the pixels is expressed in the RGB color model, the average brightness may be computed according to the formula:

$$B_1 = \frac{1}{N_1} \sum_{i \in P_1} f\big((R_i \quad G_i \quad B_i)\big), \qquad (2)$$

wherein $(R_i\, G_i\, B_i)$ is the triplet that determines the intensity of the pixel $i$ of the first plurality of pixels $P_1$ and $N_1$ is the number of pixels of the first plurality of pixels. The function $f$ may be a formula for determining the luminance of a pixel. For example, the function $f$ may be equal to:

$$f\big((R \quad G \quad B)\big) = c_1\, R + c_2\, G + c_3\, B. \qquad (3)$$

In particular, the coefficients $c_1$, $c_2$, $c_3$ may be equal to:

$$c_1 = 0.2126, \quad c_2 = 0.7152, \quad c_3 = 0.0722; \qquad (4a)$$

or equal to:

$$c_1 = 0.299, \quad c_2 = 0.587, \quad c_3 = 0.114; \qquad (4b)$$

or equal to:

$$c_1 = 0.3, \quad c_2 = 0.59, \quad c_3 = 0.11. \qquad (4c)$$

Alternatively, the following relations may substantially hold:

$$c_1 = \frac{1}{3}, \quad c_2 = \frac{1}{3}, \quad c_3 = \frac{1}{3}. \qquad (4d)$$

In particular, each of the coefficients $c_1$, $c_2$, $c_3$ may be comprised in the interval between 0.33 and 0.33333 and, more particularly, in the interval between 0.333 and 0.3333.

Alternatively, the function $f$ may be equal to:

$$f\big((R \quad G \quad B)\big) = \sqrt{a_1 R^2 + a_2 G^2 + a_3 B^2}, \qquad (5)$$

wherein, for instance, $a_i = c_i \, \forall \, i = 1,2,3$ and, in particular, $a_1 = 0.299$, $a_2 = 0.587$ and $a_3 = 0.114$. The optimal brightness, $B_{opt}$, may be the average brightness value of a 18% grey card.

Alternatively, or in conjunction with the above, the step of determining the first value of the exposure value may comprise generating the histogram distributions in the R-, G-, and B-channels by using each pixel of the first plurality of pixels. Alternatively, or in conjunction with the above, the step of determining the first value of the exposure value may comprise generating the histogram distributions in the greyscale channel by using each pixel of the first plurality of pixels.

In particular, if the first image is monochromatic, the latter histogram may be constructed by associating to each pixel of the first plurality of pixels a greyscale intensity. The greyscale intensity, $I_{G,i}$, associated to the pixel $i$ of the first plurality of pixels may be given by:

$$I_{G,i} = c_1 R_i + c_2 G_i + c_3 B_i,$$

wherein $(R_i\, G_i\, B_i)$ is the triplet that determines the intensity of the pixel $i$ of the first plurality of pixels $P_1$. The coefficients $c_1$, $c_2$, $c_3$ have been described above and their numerical value may be given by each of the equations (4a) to (4d).

The step of determining the first value may further comprise determining whether the first image is over- or under-exposed and modifying the exposure value accordingly. In particular, if the first image is underexposed, the first value, $E_{v,1}$, of the exposure value is chosen to be greater than $E_{v,0}$, e.g. $E_{v,1} = 2 E_{v,0}$. If the first image is overexposed, the first value, $E_{v,1}$, of the exposure value is chosen to be lower than $E_{v,0}$, e.g. $E_{v,1} = E_{v,0}/2$.

For instance, if the camera parameter is the exposure time, the first value expressed in seconds, $E_{t,1}$, of the exposure time may be determined by using the following formula:

$$E_{t,1} \;=\; \frac{F_0^2}{2^{E_{v,1}}}. \qquad (6)$$

If the camera parameter is the f-stop, the first value, $F_1$, of the f-stop may be determined by using the formula:

$$F_1 \;=\; \sqrt{E_{t,0}\, 2^{E_{v,1}}}. \qquad (7)$$

wherein $E_{t,0}$ is expressed in seconds. In eqs. (6) and (7), $E_{v,1}$ may be computed by using eq. (1).

In particular, the camera parameter may be an entry of a diagonal, three-dimensional white balancing matrix. The step of the determining the first value of the camera parameter may comprise determining the first value, $v_1$, of the first diagonal entry, the first value, $v_2$, of the second diagonal entry, and the first value, $v_3$, of the third diagonal entry of said matrix. For example, the values $v_1$, $v_2$ and $v_3$ may be computed by using the following formulas:

$$v_1 = \frac{R_{ref}}{R_{avg}}, \quad v_2 = \frac{G_{ref}}{G_{avg}}, \quad v_3 = \frac{B_{ref}}{B_{avg}}, \qquad (8)$$

wherein

$$R_{avg} = \frac{1}{N_1} \sum_{i \in P_1} R_i, \quad G_{avg} = \frac{1}{N_1} \sum_{i \in P_1} G_i, \quad B_{avg} = \frac{1}{N_1} \sum_{i \in P_1} B_i. \qquad (9)$$

In eq. (9), $(R_i\, G_i\, B_i)$ is the triplet that determines the intensity of the pixel $i$ of the first plurality of pixels $P_1$ and $N_1$ is the number of pixels comprised in the first plurality of pixels. In particular, each of $R_{ref}$, $G_{ref}$, and $B_{ref}$ may be equal to 255. Alternatively, or in conjunction with the above, the following relations may substantially hold:

$$R_{ref} = G_{ref} = B_{ref} = \left( R_{avg} + G_{avg} + B_{avg} \right). \qquad (10)$$

In a further embodiment of the present invention, for each pixel of the first set of pixels, the respective position information associated to said each pixel fulfils the first condition if said respective position information specifies that said each pixel is arranged in the first image outside the first image portion.

For example, if the fourth set of pixels is a circle with a radius and a central pixel, for each pixel of the first set of pixels, the respective position information associated to said each pixel specifies whether the distance between said each pixel and the central pixel is greater than the radius. In this case, in particular, the first condition comprises the condition that said distance is greater than the radius of the circle.

For instance, if the first image portion displays the to-be-identified objects, in this embodiment the determination of the first value is carried out by using the pixels, that do not display said objects, e.g. the pixels that display a background region of the scene. For instance, if the camera is comprised in an ALS, the background region of the scene comprises the portions of the work deck free from labware items. In this case, the pixels displaying the background region of the scene may be used to determine the first values of the entries of a white balance matrix, because, typically, the color of the work deck known.

In this case, the first value of the calibration parameter is optimized for faithfully reproducing the scene portion that does not displays the to-be-identified objects, e.g. the given background portion of the scene. Hence, for instance, an image captured by using the first value of the camera parameter may be processed by a High-dynamic-range (HDR) algorithm to produce an image in which both the background region of the scene and the first scene region are faithfully reproduced.

According to a further embodiment of the invention, for each pixel of the first set of pixels, the respective position information associated to said each pixel fulfils the first condition if said respective position information specifies that the first image portion comprises said each pixel.

For example, if the fourth set of pixels is a circle with a radius and a central pixel, for each pixel of the first set of pixels, the respective position information associated to said each pixel specifies whether the distance between said each pixel and the central pixel is smaller than or equal to the radius. In this case, in particular, the first condition comprises the condition that said distance is smaller than or equal to the radius of the circle.

For instance, if the first image portion displays the to-be-identified objects, in this embodiment the determination of the first value of the camera parameter is carried out by using the pixels, that display said objects. In this case, the first value of the calibration parameter is thus optimized for faithfully reproducing the ROIs, i.e. the image portions, that display the to-be-identified objects. Hence, for instance, an image captured by using the first value of the camera parameter may be processed by a HDR algorithm to produce an image in which both the background portion of the scene and the first scene region are faithfully reproduced.

In an embodiment the present invention, for each pixel of the first set of pixels, the respective position information associated to said each pixel specifies whether the first image portion comprises said each pixel. For example, if the fourth set of pixels is a circle with a radius and a central pixel, for each pixel of the first set of pixels, the respective position information associated to said each pixel specifies whether the distance between said each pixel and the central pixel is lower than or equal to the radius.

A further embodiment of the method of the present invention further comprises the step of:

- acquiring the information indicative of the location of the first image portion in the first image.

The step of acquiring the information indicative of the location of the first image portion may comprise receiving said information e.g. from a computing device. Alternatively, or in conjunction with the above, the step of acquiring information indicative of the location of the first image portion may comprise retrieving said information e.g. from a computing device, from the primary and/or secondary memory thereof, from a database, and/or from a cloud.

In particular, the step of acquiring information indicative of the location of the first image portion in the first image is carried out by using the first image. If this is the case, for instance, the information indicative of the location of the first image portion in the first image may be obtained by using an algorithm that processes the pixels of the first image to generate said information.

In a further embodiment of the method of the present invention, the step of acquiring the information indicative of the location of the first image portion in the first region may be carried out by using a locating algorithm for determining the location of the first image portion in the first image.

An algorithm is in particular a collection, e.g. a sequence, of instructions for processing input information to obtain output information. The instructions of an algorithm may be implemented in a computer and executed by a processor e.g. of the data processing system according to the present invention. In particular, the input information of the algorithm is encoded in input data that may be accessed by the processor carrying out the algorithm. In particular, the processor processes the input data according to the instructions of the algorithm to generate output information, which, typically, is encoded in output data. According to the present invention, in particular, an algorithm processes data when the algorithm comprises instructions, which, when executed by a processor, cause said processor to process these data.

For example, the information indicative of the location of the first image portion in the first image may consists of information indicative of an estimate of the location of this portion. In particular, said estimate may be obtained by using the locating algorithm.

For instance, the step of acquiring information indicative of the location of the first image portion comprises generating said information by using the locating algorithm. Said information may be the output of the locating algorithm and, in particular, may be generated by carrying out said algorithm. In particular, the locating algorithm processes input data which comprise the position and the intensity value of each pixel of a first array of pixels of the first image. The first array of pixels may comprise the first set of pixels and, in particular, the first image may consist of the first array of pixels. The locating algorithm may comprise a machine learning algorithm, e.g. a classifier.

The locating algorithm may comprise instructions which, when executed by the computing device implementing the method of the present invention, cause said device to process the pixels of the first image to assess whether the first image displays the first object, thereby generating output data. Said output data comprises information specifying whether the first image comprises the first object and/or information specifying the probability that the first image displays the first object. Moreover, said output data comprises information indicative of an estimate of the location, at which the first object is displayed in the first image. Said information constitutes the information indicative of the location of the first image portion, which displays the first scene region comprising the first object.

For example, if the first scene region comprises the first object, e.g. the first labware item, the locating algorithm may comprise a classifier. In particular, the classifier carries out a multiclass classification to generate information indicative to which class the first object belongs. Moreover, said classification generates information indicative of an estimate of the location, at which the first object is displayed in the first image. The latter information is then used to generate the information indicative of the location of the first image portion, which displays the first scene region comprising the first object. The classifier does not need to be particularly accurate, because the classification performed by the classifier is used only to provide an estimate of the position of the first image portion. In particular, in this case, a sufficiently accurate estimate of the position of the first object may be attained without the need of extensive training procedures and/or large training data sets.

The use of a location algorithm allows for determining the information about the location of the first image without the need to provide said information, e.g. by hard coding it and/or by storing it in a secondary memory of a computer. This way, the implementation of the method of the present invention is simplified and the sources of human errors reduced. For example, if the camera is comprised in an ALS, the position of the labware items onto the work deck and, hence, the scene captured by the camera depends on the laboratory procedure, that the ALS has to perform. According to this embodiment, the locating algorithm takes care automatically of possible changes in the scene, without the need to hard code and/or store the corresponding changes in the information indicative of the position of the first image portion.

According to an embodiment of the method of the present invention, the step of acquiring the information indicative of the location of the first image portion in the first region may be carried out by using:

- a set of extrinsic calibration parameters associated with the camera,
- a set of intrinsic calibration parameters associated with the camera,
- information indicative of the position of the scene and of the camera with respect to one another,
- information indicative of the shape of the first scene region, and/or
- information indicative of the location of the first scene region in the scene.

In particular, extrinsic calibration parameters associated with a camera describe the position and/or the orientation of said camera with respect to a world frame and according to a camera model (such as the pinhole camera model). The set of extrinsic parameters may comprise extrinsic calibration parameters that are suitable to describe the transformation from a three-dimensional world coordinate system to the three-dimensional coordinate system of the camera. In particular, the set of extrinsic parameters may comprise parameters suitable to determine the entries of a three-dimensional rotation matrix and the coordinates of a three-dimensional translation vector. In particular, the three-dimensional rotation matrix and the three-dimensional translation vector describe the transformation from the three-dimensional world coordinate system to the three-dimensional coordinate system of the camera. The set of extrinsic parameters may be obtained by using an extrinsic calibration method to calibrate the camera.

In particular, intrinsic calibration parameters associated with a camera may describe the intrinsic characteristics of said camera and may be obtained by using an intrinsic calibration method to calibrate said camera. The set of intrinsic parameters may comprise intrinsic calibration parameters that are suitable to describe a projective transformation from the three-dimensional coordinate system of the camera into the two-dimensional coordinates of the first image. For example, the set of intrinsic calibration parameters comprise the focal length, the optical center, the scale factors, the skew factor, the principal point coordinates, the radial distortion coefficients, and/or the tangential distortion coefficients of the camera. The set of intrinsic parameters may comprise parameters suitable to determine the entries of the camera matrix, e.g. the focal length and the optical center.

For instance, the input data processed by the location algorithm may depend, e.g. comprise, the elements of the set of intrinsic calibration parameters and/or the elements of the set of extrinsic calibration parameters, so that the location algorithm depends on the elements of the set of intrinsic calibration parameters and/or on the elements of the set of extrinsic calibration parameters. In particular, the set of extrinsic calibration parameters and/or the set of intrinsic calibration parameters consist, respectively, of one or more extrinsic calibration parameters and/or of one or more intrinsic calibration parameters associated to the camera.

The extrinsic parameters of the set of extrinsic calibration parameters and/or the intrinsic parameters of the set of intrinsic calibration parameters may be used by the locating algorithm to process the first image, thereby increasing the quality of the data processed by the said algorithm. For example, said parameters may be used to adjust the first image for the intrinsic characteristics of the camera and/or to align the work deck and/or the labware item displayed in the first image. Alternatively, or in conjunction with the above, the aforementioned parameters may be used by the locating algorithm to acquire information about the geometric features of the scene depicted in the first image. For instance, the extrinsic and/or intrinsic parameters may be used to estimate the size of the objects in the first image and/or to determine the location of the camera with respect to the work deck or the labware item. This way, the accuracy of the information indicative of the position of the first image portion is increased.

For example, if the scene comprises a work deck of an ALS, the information indicative of the position of the scene and of the camera with respect to one another may comprise information indicative of the position and orientation of the focal plane of the camera with respect to the work deck. For instance, the latter information may comprise the coordinates of at least three points of the focal plane in a reference frame, in which the work deck is position in the x, y plane. If the focal plane is substantially parallel to the work deck, the information indicative of the position of the scene and of the camera with respect to one another may consist of the coordinate of one point of the focal plane in the aforementioned reference frame.

If the first scene region comprises the first labware item and the first portion of the work deck, the information indicative of the shape of the first scene region may comprise information indicative of the shape of the first labware item. For example, if the first labware item is a reservoir rack, the information indicative of the shape of the first scene region specifies that the first scene region has a generally parallelepipedic shape.

If the first scene region comprises the first labware item and the first portion of the work deck, the information indicative of the location of the first scene region in the scene may specify the location of the first labware item with respect to the work deck. For example, said information may comprise information about the location of the region of the work deck, in which the first labware item is positioned or expected to be positioned.

For instance, the input data processed by the location algorithm may depend, e.g. comprise, the information indicative of the position of the scene and of the camera with respect to one another, the information indicative of the shape of the first scene region, and/or the information indicative of the location of the first scene region in the scene.

The information about the scene and/or the information about the first scene region allows for increasing the accuracy of the determination of the location of the first image portion, as said location depends on the position of the first scene region in the scene. This accuracy is further increased when the information indicative of the position of the scene and of the camera with respect to one another is combined with the information about the shape and/or the location of the first scene region.

Moreover, the information about the scene and/or the information about the first scene region allows for a relatively precise location of the portion of the first image that displays the first image region, e.g. of the first image portion. Hence, in this embodiment, the position constraint encoded by the first condition is based on a relatively accurate pixel-based description of the position of the features displayed by the first plurality of pixels with respect to first scene region. Hence, the adaptivity of the calibration of the present invention to the features of the scene is further increased.

An embodiment of the method of the present invention comprises the step of:

- acquiring a second image by using at least the first value of the camera parameter.

In this embodiment, in particular, the camera parameter is the exposure time and/or the second image displays the scene. In particular, in this embodiment, the first scene region comprises the first object to be identified, e.g. the first labware item, and the first image portion displays at least a portion of said object, e.g. the entire first object. Moreover, the method of the present invention may further comprise the step of identifying the first object by using the second image.

In this embodiment, the first value of the camera parameter is determined by using the pixels displaying the first object to be identified. Hence, the second image, which is captured by using the first value of the camera parameter, provides a faithful representation of said object. This way, the accuracy of the identification of the object is increased.

The step of acquiring an image by using a value of the camera parameter may comprise, e.g. consist of, capturing said image by using the camera with the camera parameter set to said value. This step may further comprise storing said image in a primary or secondary memory e.g. of a computing device and/or of the camera, and accessing said image.

The step of acquiring the second image may comprise, e.g. consists of, modifying the first image by using the first value of the camera parameter. For instance, if the step of the determining the first value of the camera parameter comprises determining values $v_1$, $v_2$ and $v_3$ defined in eq. (8), the second image may be acquired by modifying the intensity of the pixels of the first image by using the matrix:

$$W_1 = \begin{pmatrix} v_1 & 0 & 0 \\ 0 & v_2 & 0 \\ 0 & 0 & v_3 \end{pmatrix}. \qquad (11)$$

In particular, the second image consists of the pixels of the first image and, in the second image, the intensity of the pixel $i$ is expressed by the triplet $(R'_i \, G'_i \, B'_i)$, wherein, for each pixel $i$ of the second image the following relation holds:

$$(R'_i \quad G'_i \quad B'_i)^T = W_1 (R_i \quad G_i \quad B_i)^T = (v_1 R_i \quad v_2 G_i \quad v_3 B_i)^T. \qquad (12)$$

In eq. (12), the symbol "$T$" represents the transposition operation and the triplet ($R_i$ $G_i$ $B_i$) expresses the intensity of the pixel $i$ in the first image.

An embodiment of the method of the present invention comprises the steps of:

- acquiring a third image by using at least a second value of the camera parameter; and
- constructing a fourth image by using the second image, the third image and a High-dynamic-range (HDR) algorithm.

In this embodiment, for example, the camera parameter is the exposure time. In particular, the third image displays the scene and/or the third image is the first image.

An image can faithfully display scene features with luminance values comprised within a given luminance interval, called dynamic range. Scene features with luminance value outside the dynamic range cannot be discerned in the image. In particular, scene features with luminance smaller than the lower endpoint of the brightness interval would appear to be black and scene features with luminance values greater than the upper endpoint of the dynamic range would appear to be white. In general, the luminance values comprised in the dynamic range depend on the values of the camera parameter used to capture the image, e. g. on the exposure time.

In particular, a HDR algorithm processes a plurality of input images depicting the same scene to construct a HDR image, e.g. the fourth image, having a dynamic range, which is greater than the dynamic range of the input images. This way, the HDR image is able to faithfully display scenes comprising both very bright and very dark regions. For instance, the HDR algorithm may construct the HDR image by merging the images of the plurality of input images by using the exposure fusion method.

In particular, the plurality of input images comprises the second and the third image. Each input image of the plurality of input images is captured by using the camera with the camera parameter set to a respective value associated to said each image, so that different images are associated to different values of the camera parameter. Hence, in particular, the first value of the camera parameter is different from the second value of the camera parameter. The images of the plurality of input images may be captured by using an exposure bracketing technique.

An embodiment of the method of the present invention further comprises the step of identifying the first object by using the fourth image. In this embodiment, the first value of the camera parameter is determined by using the pixels displaying the first object to be identified. Hence, the second image, which is captured by using the first value of the camera parameter, provides a faithful representation of the first object. Moreover, the fourth image is obtained by combining the second image with the third image by means of the HDR algorithm and, hence, provides a representation of the scene, which is more faithful than the one provided by the second and the third image. This way, the accuracy of the identification the first object is increased.

The method of the present invention may comprise the step of identifying the first object by using the second and/or the fourth image. In particular, the first object may be comprised in the first scene region. In particular, the step of identifying the first object may be carried out by using an identification algorithm. For example, said algorithm processes the second and/or the fourth image, e.g., respectively, the pixels of the second and/or the fourth image, to generate identification data. The identification algorithm also process the information indicative to which class the first object belongs, if available, thereby increasing the accuracy of the identification of the first object.

The identification data may comprise information indicative of a position estimate of the position of the first object in the second and/or fourth image. The identification data may also comprise information indicative of the reliability of this position estimate. Alternatively, or in conjunction with the above, the identification data may comprise information indicative of an estimate of what the first object is and, optionally, information indicative of the reliability of said estimate.

According to an embodiment of the method, the identification algorithm comprises at least a machine learning algorithm. In particular, a machine learning algorithm comprises instructions for processing input information to obtain output information and at least some of these instructions are set by using a set of training data and a training algorithm. The machine learning algorithm may comprise an Artificial Neural Network (ANN), a decision tree, a random forest, a support vector machine (SVM), or the like. For example, the first machine learning algorithm may be a convolutional neural network and/or a deep neural network, such as AlexNet.

According to a further embodiment of the method of the present invention, the first scene comprises a second scene region, the second scene region being displayed in a second image portion of the first image, and the first image comprises a second set of pixels. Moreover, said embodiment comprises the steps of:

- generating, for each pixel of the second set of pixels, a respective second data item associated to said each pixel, wherein said respective second data item comprises respective position information associated to said each pixel, said respective position information being indicative of the position in the first image of said each pixel with respect to the location of the second image portion in the first image; and
- determining the second value of the camera parameter by using at least a second plurality of pixels of the second set of pixels, wherein, for each pixel of the second plurality of pixels, the respective position information associated to said each pixel fulfils a second condition.

In particular, the second scene region comprises a second to-be-identified object. For example, the first scene may comprise the work deck of the ALS and a second labware item positioned on the work deck, the second labware item is the object to be identified. In this case, the second image region may comprise the second labware item and at least a second region of the work deck. In particular, the second scene region may consist of a plurality of scene regions which are disconnected to one another.

The second image portion may consist of a fifth set of pixels of the first image. In particular, the fifth set of pixels comprises, e.g. consists of, the pixels which are estimated to display the second scene region. In particular, the second image may consist of the second set of pixels. In particular, the first scene image portion may consist of a plurality of image portions which are disconnected to one another. In particular the second set of pixels may be equal to the first set of pixels.

In particular, the location of the second image portion in the first image may be specified by information indicative this location. For instance, said information comprises information indicative of the position in the first image of each pixel of the fifth set of pixels. For example, the fifth set of pixels is a rectangular grid of the first image. Any structure format may be used to encode the information indicative of the location of the second image portion in the first image, insofar that the information comprised therein may be retrieved and interpreted correctly.

For each pixel of the second set of pixels, the information indicative of the position of said each pixel with respect to the location of the second image portion may specify whether said each pixel is comprised in the second image portion, e.g. in the fifth set of pixels. Alternatively, or in conjunction with the above, the information indicative of the position of said each pixel with respect to the location of the second image portion may specify the distance between said each pixel and the second image portion and/or whether said distance is greater than a specified distance value. For example, the distance between a pixel and the second image portion may be the distance between said pixel and a reference pixel of the fifth set of pixels.

For example, for each pixel of the second set of pixels, the second data item associated to said each pixel may be generated by generating the information associated to said each pixel, by encoding said information in the second data item associated to said each pixel and by storing said second data item in a primary and/or secondary memory of a computing device.

For each pixel of the first set of pixels, the information associated to said each pixel may be the output of a second information generating algorithm. In particular the second information generating algorithm may process the position of a pixel in the first image to assess whether said pixel is comprised in the second image portion, e.g. in the fifth set of pixels. Alternatively, or in conjunction with the above, the second information generating algorithm may process the position of a pixel in the first image to determine the distance between said pixel and the reference pixel of the fifth set of pixels and, optionally, to assess whether said distance is greater than or equal to the specified distance value.

For example, if, for each pixel of the second set of pixels, the second data item associated thereto has a Boolean data type, the second condition may comprise the condition that the value of second data item is "True". If, for each pixel of the second set of pixels, the value of the second data item associated to said each pixel specifies the distance between said each pixel and the reference pixel, the second condition may comprise the condition that the second data item is greater than or equal to the specified distance value. In particular, for each pixel of the second plurality of pixels, the respective position information associated to said each pixel may fulfil at least a further condition.

The step of determining the first value of the camera parameter may be carried out by using the determination algorithm. In particular, in this case, the determination algorithm processes the intensity of at least each pixel of the second plurality of pixels to determine the second value of the camera parameter. The step of determining the second value of the camera parameter may comprise determining, for each camera parameter of the set of camera parameters, a respective second value of said each camera parameter.

In this embodiment, the second value of the camera parameter is determined by using the pixels displaying the second scene region. Hence, the third image, which is captured by using the second value of the camera parameter, provides a faithful representation of the second scene region. Moreover, the fourth image, which is obtained by combining the second image with the third image by means of the HDR algorithm, provides a representation of the first and the second scene region, which is more faithful than the one provided by the second and the third image.

In particular, in this embodiment, the second scene region may comprise the second object to be identified, e.g. the second labware item, and the second image portion displays at least a portion of said object, e.g. the entire second object. Moreover, the method of the present invention may further comprise the step of identifying the second object by using the fourth image.

In this embodiment, the accuracy of the identification the first and the second object is increased, as this identification is carried out by using the fourth image and said image provides a representation of the scene, which is more faithful than the one provided by the second and the third image.

In an embodiment of the present invention, the step of generating, for each pixel of the first set of pixels, a respective first data item associated to said each pixel is carried out by using information indicative of the shape of the first image portion.

For instance, if the fourth set of pixels is a circle of the first image, the information indicative of the shape of the first image portion may comprise the value of the radius of the fourth set of pixels. For example, if the fourth set of pixels is a rectangular grid of the first image, the information indicative of the shape of the first image portion may comprise the value of the base and the value of the height of the rectangular grid. For instance, the information indicative of the shape of the first image portion may consists of information indicative of an estimate of the shape of the said portion.

The information indicative of the shape of the first image portion may be used to generate at least part of the information indicative of the location of the first image portion in the first image. More specifically, the information indicative of the shape of the first image portion may be used to construct the fourth set of pixels. For example, the latter information specifies that the first image portion is a circle with a given radius, R, and the information indicative of the location of the first image portion specifies the position of the central pixel, C, in the first image. In this case, the fourth set of pixels may be constructed by selecting each pixel, P, of the first image that fulfils the following relation $d(C, P) \leq R$.

If the first scene region comprises the first labware item and the first portion of the work deck, the information indicative of the shape of the first image portion may comprise information indicative of the border of the first labware item, as seen from the point of view of the focal plane. For example, the focal plane may be substantially parallel to the work deck and the first labware item may be a reservoir rack with a generally parallelepipedic shape. In this case, the shape of the first image portion corresponds to the border of the first labware item as seen from the point of view focal plane, and, depending on the position of the focal plane with respect to the reservoir rack, may be rectangular or hexagonal. Hence, in this case, the information indicative of the shape of the first image portion specifies that the first image portion is of rectangular or hexagonal shape.

In particular, the shape of the first image portion may be based on and/or comprise information indicative of the shape of the first scene region. The latter information allows for a more precise location of the portion of the first image that displays the first image region, e.g. of the first image portion. Hence, the position constraints encoded by the first condition is based on a relatively accurate pixel-based description of the position of the features displayed by the first plurality of pixels with respect to first scene region. The adaptivity of the calibration of the present invention to the features of the scene is thereby further increased.

In particular, the method of the present invention comprises the step of:

- acquiring the information indicative of the shape of the first image portion by using at least the first image and a shape determining algorithm for obtaining the shape of the first image portion in the first image.

In particular, the locating algorithm may comprise the shape determining algorithm. The locating algorithm may be the shape determining algorithm, i.e. the locating algorithm may carry out both the step of acquiring the information indicative of the shape of the first image portion and the shape of acquiring the information indicative of the location of the first image portion in the first image.

For instance, the step of acquiring information indicative of the shape of the first image portion comprises generating said information by using the shape determining algorithm. Said information may be the output of the shape determining algorithm and, in particular, may be generated by carrying out said algorithm. In particular, the shape determining algorithm processes input data which comprise the position and the intensity value of each pixel of the aforementioned first array of pixels. Alternatively, or in conjunction with the above, the input data processed by the shape determining algorithm may comprise information indicative of the shape of the first scene region.

For instance, if the information indicative of the shape of the first image portion may consists of information indicative of an estimate of the shape of the said portion, said estimate may be obtained by using the shape determining algorithm.

The use of a shape determining algorithm allows for obtaining the information about the shape of the first image without the need to provide said information, e.g. by hard coding it and/or by storing it in a secondary memory of a computer. This way, the implementation of the method of the present invention is simplified and the sources human errors reduced.

According to a further embodiment of the method of the present invention, the step of determining the first value of the camera parameter by using at least the first set of pixels comprises:

• selecting the first plurality of pixels at least by checking, for at least each pixel of a third set of pixels, whether the respective position information associated to said each pixel fulfils the first condition.

The first of pixels may comprise each pixel of the third set of pixels and, for example, the third set of pixels may be equal to the first set of pixels. In particular the first plurality of pixels is selected among the pixels of the third set of pixels.

For example, if, for each pixel of the first set of pixels, the respective first data item associated thereto has a Boolean data type, the selecting of the first plurality of pixels is carried out at least by checking, for each pixel of the third set of pixels, whether the value of the respective first data item associated to said each pixel is "True". The selecting of the first plurality of pixels may be carried out by constructing the first plurality of pixels by using the third set of pixels.

In particular, the selecting of the first plurality of pixels comprises, for each pixel of the third set of pixels, accessing the respective position information associated to said each pixel, checking whether said position information fulfils the first condition and, if the information associated to said each pixel fulfils the first condition, using said each pixel to determine the first value of the camera parameter.

In particular, the step of selecting the first plurality of pixels may comprise selecting the third set of pixels. For instance, the selecting of the third set of pixels may be carried out by constructing the third set of pixels by using the first set of pixels. For example, the construction of the third set of pixels may be carried out by randomly selecting a plurality of pixels of the first set of pixels. In particular, said random selection may be carried out by using a random selection algorithm. For instance, the random selection algorithm comprises:

- randomly associating to each pixel of the first set of pixels a respective Boolean variable associated to said each pixel, the respective Boolean variable associated to said each pixel being equal to either "True" or "False"; and
- constructing the third set of pixels by selecting each pixel of the first set of pixels such that the respective Boolean variable associated to said each pixel is equal to "True".

The random association may be carried out in such a way that, for each pixel of the first set of pixels, the value "True" is associated with a first probability value and the value "False" is associated with a second probability value. For instance, the ratio between the second probability value and the second probability value is lower than 0.1, in particular lower than 0.01 and, more particularly, lower than 0.001.

The construction of the third set of pixels by using the random selection algorithm and the selection of the first plurality of pixels allows for investigating the robustness of the determination of the first value of the camera parameter. For instance, the method of the present invention may comprise determining a further value of the camera parameter by using a further plurality of pixels. Each pixel of said further plurality of pixels satisfies the first condition and is selected among a further set of pixels. Said further set of pixels is selected by using the first set of pixels and the random selection algorithm. In this case, the robustness of the determination of the first value of the camera parameter may be estimated by comparing the first value of the camera parameter and the aforementioned further value of the camera parameter and by assessing whether said values are significantly different from one another.

In a further embodiment of the method of the present invention, the step of accessing the first image comprises acquiring the first image by using the camera. For instance, the acquiring of the first image comprises capturing said image by using the camera with the camera parameter set to a value, which is different from the first value of the camera parameter.

According to an embodiment of the present invention, for each pixel of the first set of pixels, the respective first data item associated to said each pixel has a Boolean data type.

In a further embodiment of the method of the present invention, for each pixel of the first set of pixels, the respective first data item associated to said each pixel can assume a third value or a fourth value, wherein said first data item assumes the third value when said each pixel is comprised in the first image region and the fourth value when the said each pixel is arranged outside the first image region. According to this embodiment, for each pixel of the first set of pixels, the respective position information associated to said each pixel fulfils the first condition if the respective first data item associated to said each pixel assumes the third value. In particular, the third and the fourth value may be equal to "True" and "False", respectively. Alternatively, the third and the fourth value may be respectively equal to "False" and "True".

In particular, the scene comprises a work deck of an automated laboratory system and the first scene region comprises a region of the work deck and/or at least a portion of a labware item. For example, the first scene region may comprise the labware item.

In particular, according to the present invention, a labware item, e.g. the first and/or the second labware item, comprises or consists of a container for use in a clinical or laboratory environment. This container may be made of glass, plastic, metal, and the like. For example, a labware item may comprise or consists of a culture dish which may comprise, a top, a lid and/or bottom. Moreover, a labware item comprises or consists of a sample vial and/or a test tube. A Labware item may be for single use, for multiuse and/or disposable. According to the present invention, a labware item, e.g. the first and/or the second labware item, may comprise or consist of a plate, a tip, a tube, a reservoir, a tip box, a height adapter, a reservoir rack and/or a tube rack.

The order, according to which the steps of the method of the present invention are described in the present specification, does not necessarily reflect the chronological order, according to which said steps are carried out.

The present invention refers to a data processing system comprising processing means configured to perform the method according to the present invention. The present invention refers also to an automated laboratory system comprising the data processing system of the present invention. In particular, the automated laboratory system according to the present invention comprises a camera, processing means configured to perform the method according to the present invention and a work deck for positioning a labware item.

The present invention refers also to a computer program product comprising instructions which, when the program is executed by a computer, cause said system to carry out the method according to the present invention.

The present invention refers also to a computer-readable storage medium comprising instructions which, when executed by a computer, cause said system to carry out the method according to the present invention. In particular, the computer-readable storage medium is non-transitory.

Exemplary embodiments of the invention are described in the following with respect to the attached figures. The figures and corresponding detailed description serve merely to provide a better understanding of the invention and do not constitute a limitation whatsoever of the scope of the invention as defined in the claims. In particular:

Fig. 1        is a schematic representation of an embodiment of the data processing system according to the present invention;

Fig. 2        is a flow diagram of the operation of a first embodiment of the method of the present invention;

Figs. 3a, 3b    are schematic representations of the first image accessed by the first embodiment of the method of the present invention;

Fig. 4        is a flow diagram of the operation of a second embodiment of the method of the present invention; and

Figs. 5a, 5b    are schematic representations of the first image accessed by the second embodiment of the method of the present invention.

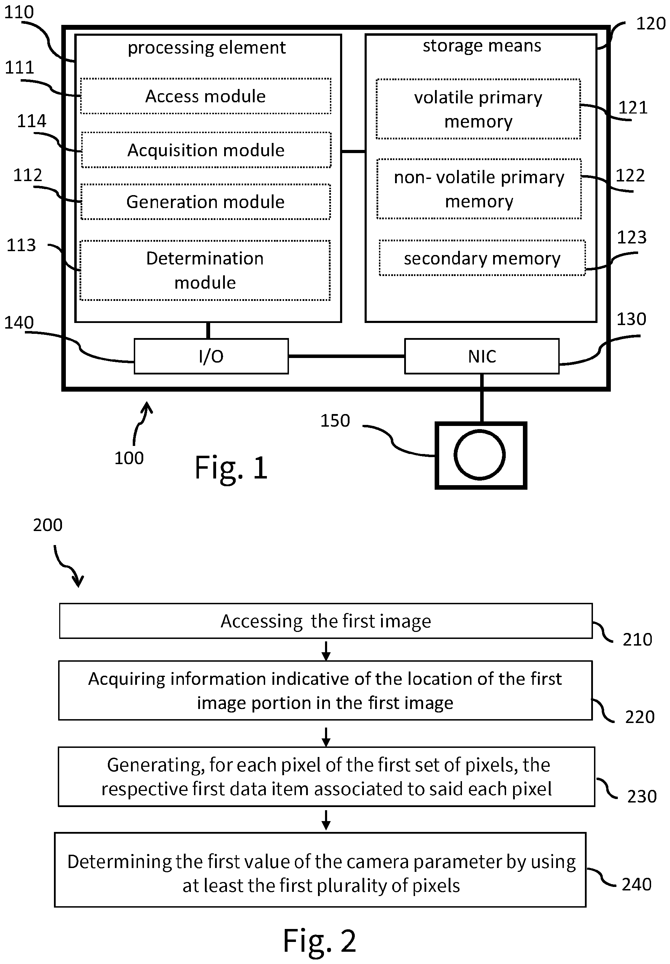

Fig. 1 is a schematic view of a first embodiment of the data processing system (DPS) 100 according to the present invention. Said data processing system 100 may comprise a computing device or a cluster thereof. The DPS 100 comprises a processing element 110 and storage means 120, which are in data communication with one another. The processing element 110 may consist of or comprise a CPU and/or a GPU and comprises several modules 111-114 configured to perform the steps of the method of the present invention.

The storage means 120 may comprise volatile primary memory 121 (e.g. a RAM, a DRAM, a SRAM, a CPU cache memory or the like) and/or non-volatile primary memory 122 (e.g. a ROM, a PROM, an EPROM or the like). In particular, the volatile primary memory may consist of a RAM. For instance, the volatile primary memory 121 temporarily holds program files for execution by the processing element and related data and the non-volatile primary memory 122 may contain bootstrap code for the operating system of the DPS 100.

The storage means 120 may further comprise a secondary memory 123, which may store the operating system and/or the instructions of the algorithms used to carry out the method of the present invention. Moreover, the secondary memory 123 may store a computer program product comprising instructions which, when the computer program product is executed by the DPS 100, cause the DPS 100 to carry out the method according to the present invention.

The secondary memory 123, the primary memories 121, 122, and the processing element 110 need not be physically housed within the same housing and may instead be spatially separated from one another. In particular, the secondary memory 123, the primary memories 121, 122, and the processing element 110 may be spatially separated from one another and may exchange data with one another via wired and/or wireless media (not shown).

The DPS 100 may comprise an input/output (I/O) interface 140 which allows the DPS 100 to communicate with input/output devices (e.g. displays, keyboards, touchscreens, printers, mice, cameras, or the like). The DPS 100 may further comprise a network interface controller (NIC) 130 configured to connect the DPS 100 with a suitable network (not shown). According to the present invention, a suitable network may for instance be an intranet, the internet or a cellular network.

The data processing system 100 comprises a digital camera 150. In particular, the camera 150 is a greyscale or a polychrome camera. The camera 150 is configured to acquire the first image and may be a photo camera and/or a video camera. As shown in fig. 1, the camera 150 may be connected to the processing element 110 via the I/O interface 140. For example, the camera 150 may be connected wirelessly to the I/O interface via the NIC 130. The camera 150 may be an intelligent device with its own memory for storing associated instructions and data for use with the I/O interface 140 or peripheral devices.

The processing element 110 comprises several modules 111 - 114 configured to carry out the method of the present invention. The access module 111 is configured to access the first image captured by the camera 150. In particular, the access module 111 is configured to operate the camera 150 to acquire the first image. The processing element 110 comprises an acquisition module 114 configured to acquire information indicative of the location of the first image portion in the first image. The generation module 112 is configured to generate, for each pixel of the first set of pixels, the respective first data item associated to said each pixel. The processing element 110 comprises a determination module 113 configured to determine the first value of the camera parameter by using at least the first plurality of pixels of the first set of pixels.

In particular, the access module 111 is configured to access the second and/or third image. For instance, the access module 111 is configured to operate the camera 150 to acquire the second and/or third image. In particular, the acquisition module 114 is configured to acquire information indicative of the location of the second image portion in the first image and/or the generation module 112 is also configured to generate, for each pixel of the second set of pixels, the respective second data item associated to said each pixel. For example, the determination module 113 is configured to determine the second value of the camera parameter by using at least the second plurality of pixels of the first set of pixels. Moreover, the processing element 110 may comprise a construction module (not shown) configured to construct the fourth image by using the second image, the third image and a HDR algorithm. The processing element 110 may further comprise an identification module (not shown) configured to identify a labware item by using an image, e.g. the second and/or the fourth image.

For example, the DPS 100 may be a computer system including the camera 150 and, more particularly, may be a smartphone, a desktop computer, a tablet, a laptop or the like. Moreover, the DPS 100 may be the ALS according to the present invention and, in particular, an automatic pipetting system. In this case, the DPS 100 comprises a work deck (not shown) for positioning one or more labware items and/or a pipetting head (not shown) for liquid transfer. The pipetting head may be movable with respect to the work deck by means of servo and/or stepper motors.

Fig. 2 is a flow diagram 200 of the operation of a first embodiment of the method according to the present invention. In particular, this embodiment may be performed by the DPS 100 described above and schematically depicted in fig. 1. In particular, the first embodiment of the method carries out the determination of a first value, $E_{v,1}$, of the exposure value. The camera 150 is arranged with respect to the work deck in such a way that scene (not shown) comprises the work deck, a table portion of the table, onto which the ALS 100 is positioned, and a labware item. For instance, the labware item may be a 96 MTP Plate. The first scene region (not shown) comprises the labware item and a portion of the work deck.

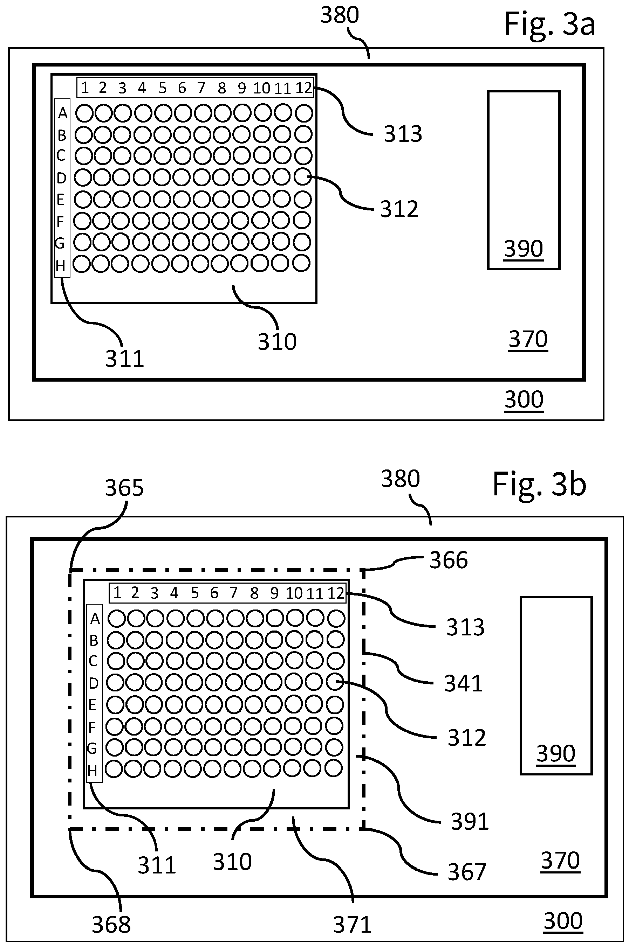

At step 210, the DPS 100 accesses the first image 300, schematically represented in figs. 3a and 3b. In particular, the DPS 100 captures the image 300 by using the camera 150 with the exposure value set to $E_{v,0}$, the exposure time set to $E_{t,0}$, and/or the f-stop set to $F_0$. In particular, the first image 300 is stored in the storage means 120 of the DPS 100. In this embodiment, the first image 300 consists of the first set of pixels.

As best shown in fig. 3a, the first image 300 displays a top view of the work deck 370 of the DPS 100. The work deck 370 comprises a waste container 590. The labware item 310 is positioned onto a region of the work deck 370 and comprises ninety-six wells 312 distributed in twelve columns and eight rows. The labware item 310 further comprises two sets of alphanumeric characters 311, 313. The first set of alphanumeric characters 311 forms a column depicting the letters A, B, C, D, E, F, G and H. The second set of alphanumeric characters 313 forms a row depicting the numbers from one to twelve. In particular, the wells 312 of the labware item 310 contain a first compound.

At step 220, the DPS 100 acquires information indicative of the location of the first image portion in the first image 300. This information is acquired by using the first image 300 and a first locating algorithm. The first locating algorithm processes first input data which comprise the position and the intensity value of each pixel of a first set of pixels. The information indicative of the location of the first image portion in the first image 300 is the output generated by carrying out the first locating algorithm.

The first locating algorithm comprises instructions which, when executed by the processing element 110 of the DPS 100, cause the processing element 110 to assess whether the first image 300 displays at a least a labware item and, in the affirmative, to provide an estimate of the location in the first image of the pixels displaying said labware item. In particular, the first locating algorithm assess whether the first image displays a 96 MTP Plate, a 1000 $\mu$l tipbox with filter, a 55 mm height adapter, and/or a reservoir rack.

The DPS 100 executes the instructions of the first locating algorithm thereby generating first output data. The first output data comprise information specifying that a first rectangular grid 391 of pixels displays a labware item, i.e. the labware item 310, which can be a 96 MTP Plate, a 1000 $\mu$l tipbox with filter, a 55 mm height adapter or a reservoir rack. In fig. 3b, the first rectangular grid 391 of pixels is marked by the dash-dotted rectangle 341 and has the pixels 365 to 368 as vertices. As best shown in fig. 3b, the first rectangular grid 391 displays the first scene region, i.e. the labware item 310 and a first portion 371 of the work deck 370. The first output data comprise information indicative of the location of the first rectangular grid 391 of pixels and, in particular, may specify the two-dimensional image coordinates of each of the aforementioned pixels 365 to 368. The first rectangular grid 391 constitutes the first image portion, i.e. the fourth set of pixels, and the information indicative of the location of the rectangular grid 391 in the first image 300 constitutes the information indicative of the location of the first image portion in the first image.

At step 230, the DPS 100 generates, for each pixel of the first set of pixels, the respective first data item associated to said each pixel. For each pixel of the first set of pixels, the respective first data item associated to said each pixel comprises respective position information associated to said each pixel, said respective position information being indicative of the position in the first image 300 of said each pixel with respect to the location of the first image portion 391 in the first image.

For each pixel of the first set of pixels, the respective first data item associated to said each pixel has a Boolean data type. In particular, for each pixel of the first set of pixels, the value of the respective first data item is "True" if said each pixel is comprised in the first image portion 391 and is "False" if said each pixel is not comprised in the first image portion 391. The first data items associated to the pixels of the first set of pixels are stored in an array data structure comprising a plurality of entries. In particular, said data structure is stored in the storage means 120 of the DPS 100.

At step 240, the first value of the exposure value is determined by using the first plurality of pixels. In particular, the first plurality of pixels consists of the pixels of the first set of pixels that fulfil the first condition. In this embodiment, the first condition consists of the requirement that the value of first data item is "True", i.e. that the pixel associated to the first data item is comprised in the first image portion 391. Hence, the first plurality of pixels consists of the first image portion 391. In particular, the first value of the exposure value may be determined by using the eqs. (1) to (5) described above.

The step 240 of determining the first value of the exposure value may comprise selecting the first plurality of pixels at least by checking, for each pixel of the first set of pixels, whether the respective position information associated to said each pixel fulfils the first condition. In particular, the selecting of the first plurality of pixels comprises, for each pixel of the first set of pixels, accessing the respective first data item associated to said each pixel, checking whether the value of said first data item is "True" and, if the value of said first data item is "True", using said each pixel to determine the first value of the camera parameter.

The first embodiment of the method of the present invention may further comprise the step of capturing the second image (not shown) by using the camera 150 with the exposure value set to the first value. The second image may be used to identify, with relatively high reliability, the labware item 310. In particular, the first embodiment of the method of the present invention, may further comprise the step of identifying the labware item by using the second image and an identification algorithm. In particular, the identification algorithm comprises instructions which, when executed by the processing element 100 of the DPS 100, cause said processing element 110 to process the pixels of the second image to generate identification data. The identification data comprise information specifying that the labware item is a 96 MTP Plate. Moreover, the identification data may comprise information indicative of an estimate of the position of the labware item. The identification algorithm may comprise at least a machine learning algorithm such as an ANN, a decision tree, a random forest, a SVM, or the like.

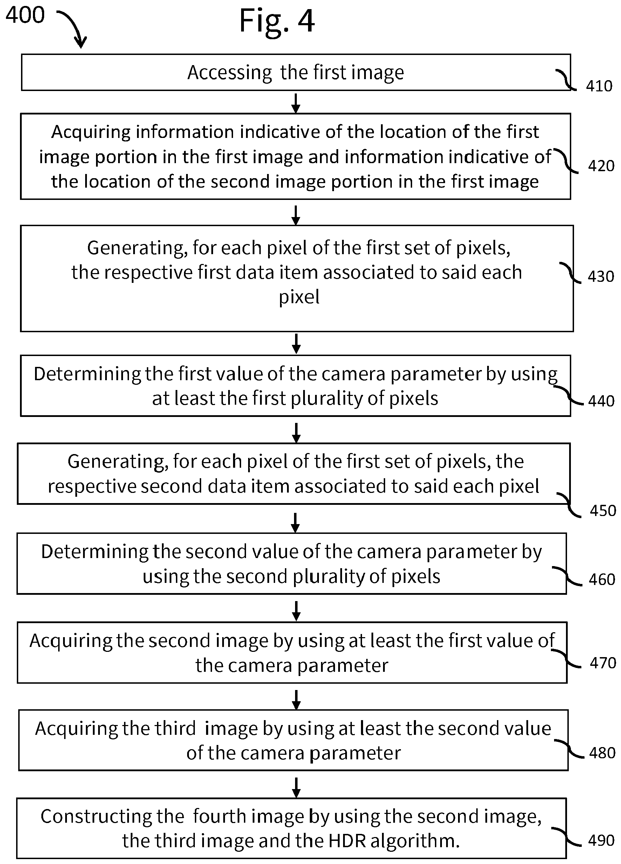

Fig. 4 is a flow diagram 400 of the operation of a second embodiment of the method according to the present invention. In particular, this embodiment may be performed by the DPS 100 described above and schematically depicted in fig. 1. In particular, the second embodiment of the method carries out the determination of a first value, $E_{v,1}$, and of a second value, $E_{v,2}$, of the exposure value. The camera 150 is arranged with respect to the work deck in such a way that scene (not shown) comprises the work deck and a table portion of the table. Onto which the DPS is positioned. The scene further comprises a first labware item, which, for instance, is a 96 MTP Plate, and a second labware item, which, for instance, is a 1000 μl tipbox with filter. The first scene region (not shown) comprises the first labware item and a first portion of the work deck. Moreover, the scene comprises a second scene region (not shown), which comprises the second labware item and a second portion of the work deck.

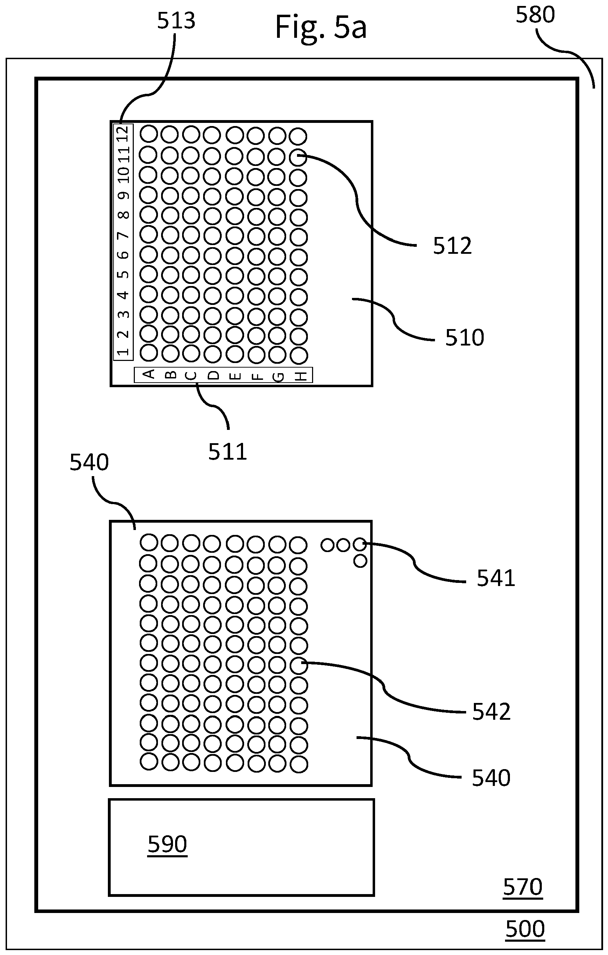

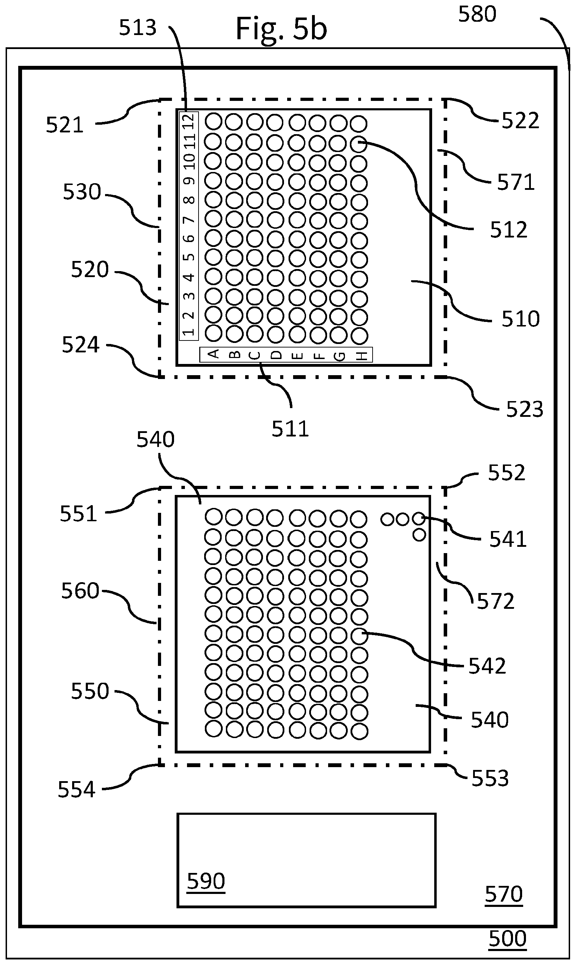

At step 410, the DPS 100 accesses the first image 500, schematically represented in figs. 5a and 5b. In particular, the DPS 100 captures the image 500 by using the camera 150 with the exposure value set to $E_{v,0}$, the exposure time set to $E_{t,0}$, and/or the f-stop set to $F_0$. In particular, the first image 500 is stored in the storage means 120 of the DPS 100. In this embodiment, the first image 500 consists of the first set of pixels. As best shown in fig. 5a, the first image 500 displays a top view of the work deck 570 of the DPS 100. The work deck 570 comprises a waste container 590. The first labware item 510 and the second labware item 520 are positioned onto a region of the work deck 570 and ninety-six wells 512 distributed in twelve columns and eight rows. The first labware item 510 comprises ninety-six wells 512 distributed in twelve columns and eight rows and two sets of alphanumeric characters 511, 513. The first set of alphanumeric characters 511 forms a column depicting the letters A, B, C, D, E, F, G and H. The second set of alphanumeric characters 513 forms a row depicting the numbers from one to twelve. The second labware item 540 comprises ninety-six tips 542 distributed in twelve columns and eight rows and an L-shaped hole patter 541 comprising four holes.

At step 420, the DPS 100 acquires information indicative of the location of the first image portion in the first image 500 and information indicative of the location of the second image portion in the first image 500. This information is acquired by using the first image 500 and the first locating algorithm used at step 220 of the first embodiment of the method, as described above and schematically depicted in fig.2. The first locating algorithm processes first input data which comprise the position and the intensity value of each pixel of the first set of pixels. The information indicative of the location of the first image portion in the first image 500 and the information indicative of the location of the second image portion in the first image 500 are the output generated by carrying out the first locating algorithm.

The DPS 100 executes the instructions of the first locating algorithm thereby generating first output data. The first output data comprise information specifying that a first rectangular grid 520 of pixels displays a labware item, i.e. the labware item 510, which can be a 96 MTP Plate, a 1000 $\mu$l tipbox with filter, a 55 mm height adapter, and/or a reservoir rack. The first output data further comprise information specifying that also a second rectangular grid 550 of pixels displays a labware item, i.e. the labware item 540, which can be a 96 MTP Plate, a 1000 $\mu$l tipbox with filter, a 55 mm height adapter, and/or a reservoir rack.

As shown in fig. 5b, the first rectangular grid 520 is marked by the dash-dotted rectangle 530 and has the pixels 521 to 524 as vertices. As best shown in fig. 5b, the first rectangular grid 520 displays the first scene region, i.e. the labware item 510 and the first portion 571 of the work deck 570. The first output data comprise information indicative of the location of the first rectangular grid 520 and, in particular, may specify the two-dimensional image coordinates of each of the pixels 521 to 524. The first rectangular grid 520 constitutes the first image portion, i.e. the fourth set of pixels, and the information indicative of the location of the first rectangular grid 520 constitutes the information indicative of the location of the first image portion.

In fig. 5b the second rectangular grid 550 is marked by the dash-dotted rectangle 560 and has the pixels 551 to 554 as vertices. The second rectangular grid 550 displays the second scene region, i.e. the labware item 540 and the second portion 572 of the work deck 570. The first output data comprise information indicative of the location of the second rectangular grid 550 and, in particular, may specify the two-dimensional image coordinates of each of the pixels 551 to 554. The second rectangular grid 550 constitutes the second image portion, i.e. the fifth set of pixels, and the information indicative of the location of the second rectangular grid 550 in the first image 500 constitutes the information indicative of the location of the second image portion.

At step 430, the DPS 100 generates, for each pixel of the first set of pixels, the respective first data item associated to said each pixel. For each pixel of the first set of pixels, the respective first data item associated to said each pixel comprises respective position information associated to said each pixel, said respective position information being indicative of the position in the first image 500 of said each pixel with respect to the location of the first image portion 520 in the first image 500. For each pixel of the first set of pixels, the respective first data item associated to said each pixel has a Boolean data type. In particular, for each pixel of the first set of pixels, the value of the respective first data item is "True" if said each pixel is comprised in the first image portion 520 and "False" if said each pixel is not comprised in the first image portion 520.The first data items associated to the pixels of the first set of pixels are stored in a first array data structure comprising a plurality of entries. In particular, said data structure is stored in the storage means 120 of the DPS 100.

At step 440, the first value of the exposure value is determined by using the first plurality of pixels. In particular, the first plurality of pixels consists of the pixels of the first set of pixels that fulfil the first condition. In this embodiment, the first condition consists of the requirement that the value of first data item is "True", i.e. that the pixel associated to the first data item is comprised in the first image portion 520. Hence, , in this embodiment, the first plurality of pixels consists of the first image portion 520. In particular, the first value of the exposure value may be determined by using the eqs. (1) to (5) described above.

At step 450, the DPS 100 generates, for each pixel of the first set of pixels, a respective second data item associated to said each pixel. For each pixel of the first set of pixels, the respective second data item associated to said each pixel has a Boolean data type. In particular, for each pixel of the first set of pixels, the value of the respective second data item is "True" if said each pixel is not comprised in the second image portion 550 and is "False" if said each pixel is comprised in the second image portion 550. The second data items associated to the pixels of the first set of pixels are stored in a second array data structure comprising a plurality of entries. In particular, said data structure is stored in the storage means 120 of the DPS 100.

At step 460, the second value of the exposure value is determined by using the second plurality of pixels. In particular, the second plurality of pixels consists of the pixels of the first set of pixels that fulfil the second condition. In this embodiment, the second condition consists of the requirement that the value of second data item is "False", i.e. that the pixel associated to the second data item is comprised in the second image portion 550. Hence, in this embodiment, the first plurality of pixels consists of the first image portion 520. The second value of the exposure value may be determined by using eqs. (1) to (5), provided that, in these equations, $E_{v,1}$ is replaced by $E_{v,2}$.

At steps 470 and 480, The DPS 110 acquires a second image (not shown) and a third image (not shown), respectively. The second image is captured by using the camera 150 with the exposure value set to the first value and the third image is captured by using the camera 150 with the exposure value set to the second value. In particular, the second and the third image may be captured by using an exposure bracketing technique. Both the second and the third image display the scene. The second image and/or the third image may be stored in the storing means 120 of the DPS 100. In particular, the second image provides a faithful representation of the first labware item 510 and the third image provides a faithful representation of the second labware item 540.

At step 490, the fourth image (not shown) is constructed by using the second image, the third image and a HDR algorithm. The HDR algorithm processes the second and the third image to construct the fourth image. The fourth image is a HDR image having a dynamic range, which is greater than the dynamic range of the second image and the third image. The fourth image provides a faithful representation of both the first labware item 510 and the second labware item 540. The fourth image may hence be used to identify, with relatively high reliability, the first labware item 510 and/or the second labware item 540.

In a variant of this embodiment, the fourth image may be constructed by using the first image, the second image, the third image and a HDR algorithm. If this case, the HDR algorithm processes the first, the second and the third image to construct the fourth image.

In particular, the second embodiment of the method of the present invention, may further comprise the step of identifying the labware items comprised in the scene by using the fourth image and an identification algorithm. In particular, the identification algorithm comprises instructions which, when executed by the processing element 110 of the DPS 100, cause said processing element 110 to process the pixels of the fourth image to generate identification data. The identification data comprise information specifying that the first labware item 510 is a 96 MTP Plate and that the second labware item 540 is a 1000 $\mu$l tipbox with filter. The identification algorithm may comprise at least a machine learning algorithm such as an ANN, a decision tree, a random forest, a SVM, or the like.

Further embodiments of the method according to the present invention may comprise the steps 410 to 490 of the second embodiment described above. The former embodiments may differ from one another and from the second embodiment in the order, according to which the steps 410 to 490 are carried out. For example, according to an embodiment of the invention, step 450 may be carried out after step 430 and before step 440. In particular, in an embodiment of the method of the present invention, the steps 450 and 460 are carried out after step 420 and before step 430. For example, in an embodiment of the method, step 480 is carried out after step 460 and before step 470.

Wherever not already described explicitly, individual embodiments, or their individual aspects and features, described in relation to the drawings can be combined or exchanged with one another without limiting or widening the scope of the described invention, whenever such a combination or exchange is meaningful and in the sense of this invention. Advantages which are described with respect to a particular embodiment of present invention or with respect to a particular figure are, wherever applicable, also advantages of other embodiments of the present invention.

**Claims**

1. A computer implemented method for determining a first value of at least a camera parameter of a camera (150), the method comprising at least the steps of:

   - accessing a first image (300, 500) captured by the camera (150), wherein the first image (300, 500) displays a scene and comprises a first set of pixels, and wherein the scene comprises a first scene region, the first scene region being displayed in a first image portion of the image (300, 500);
   - generating, for each pixel of the first set of pixels, a respective first data item associated to said each pixel, wherein said respective first data item comprises respective position information associated to said each pixel, said respective position information being indicative of the position in the first image (300, 500) of said each pixel with respect to the location of the first image portion in the first image (300, 500); and
   - determining the first value of the camera parameter by using at least a first plurality of pixels of the first set of pixels, wherein, for each pixel of the first plurality of pixels, the respective position information associated to said each pixel fulfils a first condition.

2. The method according to claim 1, wherein, for each pixel of the first set of pixels, the respective position information associated to said each pixel fulfils the first condition if said respective position information specifies that said each pixel is arranged in the first image outside the first image portion,
   or wherein, for each pixel of the first set of pixels, the respective position information associated to said each pixel fulfils the first condition if said respective position information specifies that the first image portion comprises said each pixel.

3. The method according to either claim 1 or 2, wherein, for each pixel of the first set of pixels, the respective position information associated to said each pixel specifies whether the first image portion comprises said each pixel.

4. The method according to any one of the preceding claims, further comprising the step of:

   - acquiring the information indicative of the location of the first image portion in the first image by using the first image (300, 500).

5. The method according to claim 4, wherein the step of acquiring the information indicative of the location of the first image portion in the first region is carried out by using:

- a locating algorithm for determining the location of the first image portion in the first image (300, 500),
- information indicative of the position of the scene and of the camera (150) with respect to one another,
- a set of extrinsic calibration parameters associated with the camera (150),
- a set of intrinsic calibration parameters associated with the camera (150),
- information indicative of the shape of the first scene region, and/or
- information indicative of the location of the first scene region in the scene.

6. The method according to any one of the preceding claims, further comprising the steps of:

- acquiring a second image by using at least the first value of the camera parameter;
- acquiring a third image by using at least a second value of the camera parameter; and
- constructing a fourth image by using the second image, the third image and a High-dynamic-range algorithm.

7. The method according to claim 6, wherein the scene comprises a second scene region, the second scene region being displayed in a second image portion of the first image (300, 500), wherein the first image (300, 500) comprises a second set of pixels and the method further comprises the steps of:

- generating, for each pixel of the second set of pixels, a respective second data item associated to said each pixel, wherein said respective second data item comprises respective position information associated to said each pixel, said respective position information being indicative of the position in the first image of said each pixel with respect to the location of the second image portion in the first image (300, 500); and
- determining the second value of the camera parameter by using at least a second plurality of pixels of the second set of pixels, wherein, for each pixel of the second plurality of pixels, the respective position information associated to said each pixel fulfils a second condition.

8. The method according to any one of the preceding claims, wherein the step of generating, for each pixel of the first set of pixels, the respective first data item associated to said each pixel is carried out by using information indicative of the shape of the first image portion.

9. The method according to any one of the preceding claims, wherein the step of determining the first value of the camera parameter by using at least the first set of pixels comprises:

• selecting the first plurality of pixels at least by checking, for at least each pixel of a third set of pixels, whether the respective position information associated to said each pixel fulfils the first condition,

wherein the first of pixels comprises each pixel of the third set of pixels.

10. The method according to any one of the preceding claims, wherein the camera parameter is selected from the group consisting of the gain, ISO, exposure value, exposure time, aperture size, an entry of a white balance matrix, focusing distance, brightness, contrast, f-stop, and resolution.

11. The method according to any one of the preceding claims, wherein the scene comprises a work deck of an automated laboratory system and the scene region comprises a region of the work deck and/or at least a portion of a labware item.

12. A data processing system comprising processing means configured to perform the method according to any one of the claims 1 to 11.

13. An automated laboratory system comprising a camera, processing means configured to perform the method according to any one of the claims 1 to 11, and a work deck for positioning a labware item.

14. A computer program product comprising instructions which, when the program is executed by a computer, cause said system to carry out the method according to any one of the claims 1 to 11.

15. A computer-readable storage medium comprising instructions which, when executed by a computer, cause said system to carry out the method according to any one of the claims 1 to 11.

110

processing element

111

Access module

114

Acquisition module

112

Generation module

113

Determination
module

140

I/O

100

**Fig. 1**

120

storage means

121

volatile primary
memory

122

non- volatile primary
memory

123

secondary memory

130

NIC

150

200

| Accessing the first image | 210 |
| Acquiring information indicative of the location of the first image portion in the first image | 220 |
| Generating, for each pixel of the first set of pixels, the respective first data item associated to said each pixel | 230 |
| Determining the first value of the camera parameter by using at least the first plurality of pixels | 240 |

**Fig. 2**

# Fig. 3a

380

1 2 3 4 5 6 7 8 9 10 11 12

313

312

390

310

370

311

300

# Fig. 3b

365

380

366

1 2 3 4 5 6 7 8 9 10 11 12

313

341

312

390

391

311  310

367

370

368  371

300

400

# Fig. 4

| Accessing the first image | 410 |

↓

| Acquiring information indicative of the location of the first image portion in the first image and information indicative of the location of the second image portion in the first image | 420 |

↓

| Generating, for each pixel of the first set of pixels, the respective first data item associated to said each pixel | 430 |

↓

| Determining the first value of the camera parameter by using at least the first plurality of pixels | 440 |

↓

| Generating, for each pixel of the first set of pixels, the respective second data item associated to said each pixel | 450 |

↓

| Determining the second value of the camera parameter by using the second plurality of pixels | 460 |

↓

| Acquiring the second image by using at least the first value of the camera parameter | 470 |

↓

| Acquiring the third image by using at least the second value of the camera parameter | 480 |

↓

| Constructing the fourth image by using the second image, the third image and the HDR algorithm. | 490 |

# Fig. 5a

## Fig. 5b

Europäisches
Patentamt

European
Patent Office

Office européen
des brevets

# EUROPEAN SEARCH REPORT

Application Number

EP 20 19 6056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/024505 A1 (WANG DAYOU [US] ET AL) 3 February 2011 (2011-02-03) | 1-5,8-15 | INV. G06T7/80 H04N5/235 |
| Y | * paragraphs [0042] - [0046]; figures 7A,7B,8A,8B * | 6,7 | |
| Y | US 2019/222769 A1 (SRIVASTAVA NITIN [IN] ET AL) 18 July 2019 (2019-07-18) * figure 6 * | 6,7 | |
| A | US 2016/352996 A1 (QIAN KANG [CN] ET AL) 1 December 2016 (2016-12-01) * the whole document * | 1-15 | |

TECHNICAL FIELDS
SEARCHED (IPC)

G06T
H04N

The present search report has been drawn up for all claims

| Place of search | Date of completion of the search | Examiner |
|---|---|---|
| Munich | 26 February 2021 | Tillier, Christophe |

EPO FORM 1503 03.82 (P04C01)

## ANNEX TO THE EUROPEAN SEARCH REPORT
## ON EUROPEAN PATENT APPLICATION NO.

EP 20 19 6056

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2021

| Patent document cited in search report | | Publication date | Patent family member(s) | | Publication date |
|---|---|---|---|---|---|
| US 2011024505 | A1 | 03-02-2011 | CN | 102473236 A | 23-05-2012 |
| | | | EP | 2460116 A2 | 06-06-2012 |
| | | | US | 2011024505 A1 | 03-02-2011 |
| | | | WO | 2011016924 A2 | 10-02-2011 |
| US 2019222769 | A1 | 18-07-2019 | NONE | | |
| US 2016352996 | A1 | 01-12-2016 | CN | 104937921 A | 23-09-2015 |
| | | | EP | 3062509 A1 | 31-08-2016 |
| | | | US | 2016352996 A1 | 01-12-2016 |
| | | | WO | 2015081562 A1 | 11-06-2015 |

EPO FORM P0459

For more details about this annex : see Official Journal of the European Patent Office, No. 12/82